# FASCICULE DE BREVET EUROPEEN

(11) **EP 1 251 001 B1**
(45) Date de publication et mention de la délivrance du brevet: **19.03.2008**
(21) Numéro de dépôt: 02290891.7
(22) Date de dépôt: 10.04.2002
(51) Int. Cl.: B32B 3/12, B60R 13/08, G10K 11/168

(54) **Produit thermoformé pour panneau d'insonorisation et ou d'isolation thermique**
Thermogeformte Platte mit Schall und thermischen Isolationseigenschaften
Thermoformed sound or thermal insulation panel

(30) Priorité: 17.04.2001 FR 0105275
(43) Date de publication de la demande: 23.10.2002
(73) Titulaire: Sofitec SA, 78530 Buc (FR)
(72) Inventeur: Proux, Georges, 78220 Viroflay (FR)
(74) Mandataire: Ramey, Daniel

(56) Documents cités:
- EP-A- 0 255 473
- DE-A- 3 513 662
- DE-A- 19 616 340
- DE-C- 4 334 984

## Description

La présente invention concerne un produit thermoformé pour panneau d'insonorisation et/ou d'isolation thermique, en particulier pour véhicules automobiles.

Il a déjà été proposé de former un tel panneau, en particulier pour le compartiment moteur d'un véhicule automobile, par fixation sur un support d'un élément thermoformé qui comporte des alvéoles en saillie sur une de ses faces, le support étant en matière plastique et la fixation de l'élément sur le support étant réalisée par thermosoudure par points.

Dans ce panneau, les alvéoles remplis d'air et théoriquement fermés par le support, jouent le rôle de résonateurs pour l'absorption de certaines fréquences acoustiques.

L'invention a notamment pour but de simplifier la réalisation d'un tel panneau, d'en diminuer le coût et d'en élargir les possibilités d'application.

Elle propose à cet effet un produit thermoformé, en particulier pour véhicule automobile, comprenant une feuille de matière plastique thermoformée avec des alvéoles formant des résonateurs en saillie sur une de ses faces, caractérisé en ce qu'une seconde face de ladite feuille, sur laquelle débouchent lesdits alvéoles, est recouverte d'un film de matière plastique ayant au moins une face adhésive de fixation par collage sur un support, ce film assurant une fermeture sensiblement étanche desdits alvéoles.

La fixation de la feuille thermoformée sur le support par collage au moyen du film est simple et rapide. De plus, on peut fixer la feuille sur tout support, et pas seulement sur un support adapté à la thermosoudure. Enfin, le film recouvrant la seconde face de la feuille sur le support assure une bonne obturation des alvéoles et donc une bonne insonorisation et une isolation thermique.

Selon une autre caractéristique de l'invention, la seconde face de la feuille thermoformée est recouverte d'une couche de matière adhésive.

Cette feuille de matière plastique à face adhésive peut être thermoformée sans difficulté particulière. Pour cela, on place la feuille de matière plastique, par sa face non adhésive, sur une partie de moule comportant des cavités de moulage à la forme des alvéoles à thermoformer, on descend sur la face adhésive de ladite feuille un cadre de maintien qui s'applique sur le périmètre de la zone à thermoformer de ladite feuille, le bord d'appui de ce cadre étant pourvu d'un revêtement anti-adhésif, par exemple de silicone, et on crée une aspiration ou une dépression dans les cavités de moulage pour thermoformer ladite feuille (après l'avoir chauffée jusqu'à une température de ramollissement).

En variante, le film de matière plastique est adhésif sur ses deux faces et on procède au thermoformage de la feuille de matière plastique avant d'appliquer le film adhésif sur sa seconde face, ce film fermant à étanchéité les alvéoles et permettant de fixer la feuille thermoformée par collage sur un support.

Dans une autre variante, on utilise un film de matière plastique dont une seule face est adhésive (et recouverte d'une feuille de papier protecteur, par exemple de papier siliconé), et on fixe ce film plastique par thermosoudure sur la feuille de matière thermoformable, lors de son thermoformage.

En variante, le film est fixé sur la feuille thermoformée par soudure aux ultrasons, ou par tout autre moyen approprié.

Dans un premier mode de réalisation de l'invention, la feuille thermoformée est en mousse de polyéthylène ou de polypropylène et a une épaisseur comprise entre 1 et 6 millimètres environ.

Dans une variante de réalisation, cette feuille est en polyéthylène ou polypropylène compact et a une épaisseur comprise entre 0,15 et 1 millimètre environ.

Les alvéoles thermoformés dans cette feuille sont de forme parallélépipédique ou tronconique, ou en tronc de pyramide, ayant une hauteur comprise entre 10 et 30 millimètres environ.

Leurs dimensions dépendent des fréquences acoustiques à absorber et peuvent être constantes sur la feuille thermoformée, ou bien différentes pour l'absorption de fréquences acoustiques différentes.

L'invention est applicable à la réalisation de panneaux d'insonoration et/ou d'isolation thermique dans de très nombreux domaines et en particulier dans l'industrie automobile, notamment pour l'insonorisation des parties inférieures des compartiments moteurs, l'insonorisation des faces intérieures des capots moteurs et l'isolatio thermique et l'insonorisation des portes des véhicules automobiles.

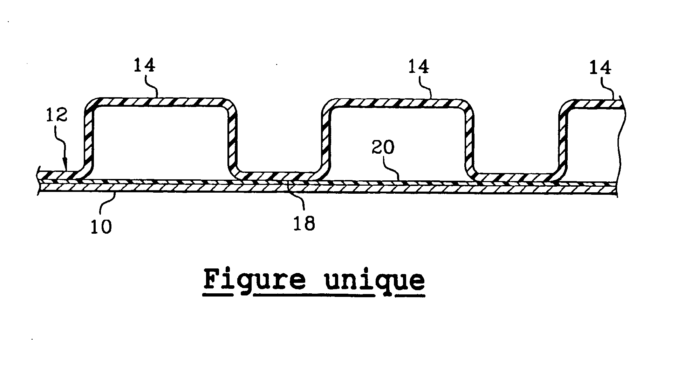

L'invention sera mieux comprise et d'autres caractéristiques, détails et avantages de celle-ci apparaîtront plus clairement à la lecture de la description qui suit, faite à titre d'exemple en référence aux dessins annexés dans lesquels la figure unique est une vue schématique partielle en coupe d'un mode de réalisation de l'invention.

Dans le dessin, la référence 10 désigne une plaque support, telle qu'une plaque de tôle par exemple, sur laquelle une feuille 12 de matière plastique thermoformée est fixée par collage, pour constituer avec la plaque support 10 un panneau d'insonorisation et d'isolation thermique.

La feuille 12 est par exemple en une mousse en polyéthylène réticulé par voie physique ou par voie chimique, ou en mousse de polypropylène réticulé par voie physique ou encore en mousse de polypropylène non réticulé. Son épaisseur est typiquement comprise entre 1 et 6 millimètres environ.

Elle comporte des alvéoles 14 formés en saillie sur sa face 16 orientée vers l'extérieur, du côté opposé à la plaque support 10. Les alvéoles 14 sont dans cet exemple de réalisation de forme cylindrique ou parallélépipédique rectangle ou carrée, et leur hauteur est comprise typiquement entre 10 et 25 ou 30 millimètres environ. Les dimensions des alvéoles 14 sont déterminées en fonction des fréquences acoustiques à absorber. Lorsque ces fréquences sont basses, on donne de plus grandes dimensions aux alvéoles 14. Inversement, lorsque ces fréquences sont plus élevées, on réduit les dimensions des alvéoles.

Les alvéoles de la feuille 12 peuvent avoir tous la même forme et les mêmes dimensions, ou bien avoir des formes identiques ou semblables, mais des dimensions différentes pour l'absorption de fréquences sonores différentes.

Dans un mode de réalisation préféré de l'invention, la face 18 de la feuille 12 reçoit une couche mince de matière adhésive avant thermoformage de la feuille 12. Par exemple, cette couche mince de matière adhésive, dont l'épaisseur est typiquement de 20 à 40 microns environ, est déposée sur la face 18 de la feuille 12 en utilisant des techniques connues, par exemple de racle ou de report. Dans le premier cas, on dépose une couche mince de matière adhésive sur la feuille 18 de la feuille 12 et on règle l'épaisseur de cette couche adhésive au moyen d'une racle. Dans le second cas, on dépose une couche de matière adhésive sur une feuille de papier siliconé, on chauffe cette couche de matière adhésive pour faire évaporer son solvant et on dépose ensuite la feuille 12 sur la couche de matière adhésive. Ensuite, on peut soit laisser la feuille de papier siliconé qui recouvre alors la face adhésive 18 de la feuille 12, soit retirer cette feuille de papier siliconé.

Le thermoformage de la feuille 12 à face adhésive 18 est réalisé de la façon suivante :

On chauffe la feuille 12 jusqu'à la température de ramollissement de la matière plastique constituant cette feuille, et on la pose par sa face non adhésive 16 sur une partie de moule comprenant des cavités de moulage à la forme des alvéoles 14 à thermoformer.

On descend ensuite sur la face adhésive 18 de la feuille 12, qui est dans ce cas-là sa face supérieure, un cadre de maintien périphérique qui entoure la partie à thermoformer de la feuille 12 et dont le bord d'appui sur la face 18 adhésive comporte un revêtement de silicone ou d'une autre matière anti-adhésive.

Le thermoformage proprement dit est réalisé par aspiration ou par dépression dans les cavités de moulage, de façon à ce que la face 16 de la feuille 12 vienne se plaquer sur les parois de ces cavités de moulage.

Ensuite, on pose sur la seconde face 18 de la feuille 12 un film 20 de matière plastique, qui est fixé par collage sur cette feuille et qui obture à étanchéité les alvéoles 14. Le film 20 comprend une face adhésive recouverte d'un papier de protection, du côté opposé à la feuille 12.

Pour utiliser le panneau, il suffit de retirer le papier de protection du film 20 et d'appliquer ce film sur la plaque support 10.

Dans une variante de réalisation, la face 18 de la feuille 12 n'est pas adhésive et est recouverte par un film 20 de matière plastique à deux faces adhésives, qui sert d'une part à obturer de façon étanche les alvéoles 14 et d'autre part à fixer la feuille thermoformée 12 sur la plaque support 10.

Dans ce cas, la feuille 12 est donc thermoformée de la façon habituelle, puis le film 20 est appliqué sur sa face 18 et l'ensemble est fixé par collage sur la plaque support 10.

Dans une autre variante de ce procédé, le film 20 comprend une face adhésive, qui est par exemple protégée par une feuille de papier siliconé ou analogue, et est fixé par son autre face sur la face 18 non adhésive de la feuille 12 thermoformée. Avantageusement, on utilise les moyens de thermoformage pour chauffer le film 18 et le fixer par thermosoudure sur la feuille 12. Ensuite, le retrait de la feuille protectrice en papier siliconé permet de fixer l'ensemble 12-20 par collage sur une plaque support. En variante, le film 20 est fixé sur la face 18 de la feuille 12 thermoformée par un autre moyen, par exemple par soudure aux ultrasons.

Dans une autre variante, la feuille 12 thermoformée peut être en matière plastique compacte, notamment en polyéthylène ou polypropylène et a dans ce cas une épaisseur comprise entre 0,15 et 1 millimètre environ.

Selon encore d'autres variantes de réalisation de l'invention, on peut utiliser une matière adhésive du type "hot melt" qui est déposée au moyen d'une filière plate sur la feuille 12 de matière plastique avant thermoformage. Par ailleurs, les matières adhésives du type acrylique ou caoutchouc peuvent également être déposées sur les feuilles 12 de matière plastique par pulvérisation ou au moyen d'une buse à lèvres. De façon générale, on peut utiliser pour cela tout système connu approprié de pose d'une matière adhésive.

Le panneau d'insonorisation qui vient d'être décrit a également une fonction d'isolation thermique et peut, dans certaines applications, être utilisé uniquement pour cette fonction d'isolation thermique. Dans une autre variante de réalisation, le film 20 de matière plastique est fixé par thermosoudure à la feuille 12, sur la face 18 de celle-ci, lorsque la feuille et le film sont superposés et passent ensemble dans des moyens de thermoformage (procédé connu sous la dénomination "twin-sheet"). Dans ce cas, le film peut être fait de la même matière que la feuille 12 et peut subir également un thermoformage, simultanément et par exemple identique ou semblable à celui de la feuille 12, les alvéoles 14 du film et de la feuille étant face-à-face et orientés dans des sens opposés. Le panneau ainsi obtenu a de bonnes propriétés d'insonorisation et d'isolation thermique et est utilisable notamment pour des portes de véhicule automobile.

## Revendications

1. - Produit thermoformé, pour panneau d'insonorisation et/ou d'isolation thermique, en particulier pour véhicule automobile, comprenant une feuille (12) de matière plastique thermoformée avec des alvéoles (14) formant des résonateurs en saillie sur une de ses faces, **caractérisé en ce qu**'une seconde face (18) de ladite feuille (12), sur laquelle débouchent lesdits alvéoles (14), est recouverte d'un film de matière plastique (20) ayant au moins une face adhésive de fixation par collage sur un support (10), ce film assurant une fermeture sensiblement étanche desdits alvéoles (14).

2. - Produit selon la revendication 1, **caractérisé en ce que** ladite feuille (12) est en mousse de polyéthylène ou de polypropylène et a une épaisseur comprise entre 1 et 6 millimètres environ.

3. - Produit selon la revendication 2, **caractérisé en ce que** ladite feuille (12) est en mousse de polyéthylène réticulé ou de polypropylène réticulé ou non réticulé.

4. - Produit selon la revendication 1, **caractérisé en ce que** ladite feuille est en polyéthylène ou polypropylène compact et a une épaisseur comprise entre 0,15 et 1 millimètre environ.

5. - Produit selon l'une des revendications 1 à 4, **caractérisé en ce que** le film précité (20) a une face adhésive et est fixé par son autre face sur la feuille (12) thermoformée, cette fixation étant par exemple une thermosoudure, ou une soudure par ultrasons.

6. - Produit selon l'une des revendications 1 à 4, **caractérisé en ce que** le film (20) de matière plastique est fixé par collage sur la seconde face (18) de la feuille (12).

7. - Produit selon l'une des revendications précédentes, **caractérisé en ce que** les alvéoles (14) sont de forme cylindrique, parallélépipédique, tronconique ou en tronc de pyramide.

8. - Produit selon l'une des revendications précédentes, **caractérisé en ce que** les alvéoles (14) ont une hauteur comprise entre 10 et 30 millimètres environ.

9. - Produit selon l'une des revendications 1 à 8, **caractérisé en ce que** le film (20) de matière plastique est thermoformé.

10. - Procédé de fabrication d'un produit thermoformé du type décrit dans l'une des revendications 1 à 8, **caractérisé en ce qu**'il consiste à thermoformer ladite feuille (12) de matière plastique, puis à appliquer sur sa seconde face (18) un film (20) de matière plastique dont au moins une face est adhésive pour fixation de l'ensemble sur un support (10).

11. - Procédé selon la revendication 10, **caractérisé en ce que** ladite seconde face (18) de la feuille (12) thermoformée est adhésive et **en ce que** le film (20) est fixé par collage sur la feuille (12).

12. - Procédé selon la revendication 10, **caractérisé en ce que** le film (20) a une seule face adhésive et est fixé par son autre face, par chauffage lors du thermoformage, sur la seconde face (18) de la feuille thermoformée (12).

13. - Procédé de fabrication d'un produit thermoformé selon la revendication 9, **caractérisé en ce qu'**il consiste à passer la feuille (12) et le film (20) de matière plastique superposés dans des moyens de thermoformage, à thermoformer au moins la feuille ou la feuille et le film simultanément, et à les fixer l'un à l'autre lors du thermoformage.

## Claims

1. Thermoformed product, for a soundproofing and/or thermally-insulating panel, in particular for a motor vehicle, comprising a sheet (12) of thermoformed plastic with cells (14) that form resonators jutting out on one of its sides, **characterized in that** a second side (18) of said sheet (12), into which said cells (14) open, is covered with a plastic film (20) having at least one adhesive side for attaching this film to a support (10) by bonding, ensuring that said cells (14) are substantially sealed.

2. Product according to Claim 1, **characterized in that** said sheet (12) is made of polyethylene or polypropylene foam and has a thickness between about 1 and 6 millimetres.

3. Product according to Claim 2, **characterized in that** said sheet (12) is made of crosslinked polyethylene foam or crosslinked or uncrosslinked polypropylene foam.

4. Product according to Claim 1, **characterized in that** said sheet is made of void-free polyethylene or polypropylene and has a thickness between about 0.15 and 1 millimetre.

5. Product according to one of Claims 1 to 4, **characterized in that** the aforementioned film (20) has an adhesive side and is attached via its other side to the thermoformed sheet (12), this attachment being, for example, a heat weld or an ultrasonic weld.

6. Product according to one of Claims 1 to 4, **characterized in that** the plastic film (20) is attached to the second side (18) of the sheet (12) by bonding.

7. Product according to one of the preceding claims, **characterized in that** the cells (14) are of cylindrical, parallelepipedal or frustoconical shape or in the form of a truncated pyramid.

8. Product according to one of the preceding claims, **characterized in that** the cells (14) have a height between about 10 and 30 millimetres.

9. Product according to one of Claims 1 to 8, **characterized in that** the plastic film (20) is thermoformed.

10. Process for manufacturing a thermoformed product of the type described in one of Claims 1 to 8, **characterized in that** it consists in thermoforming said plastic sheet (12), then in applying to its second side (18) a plastic film (20) of which at least one side is adhesive for attaching the assembly to a support (10).

11. Process according to Claim 10, **characterized in that** said second side (18) of the thermoformed sheet (12) is adhesive and **in that** the film (20) is attached to the sheet (12) by bonding.

12. Process according to Claim 10, **characterized in that** the film (20) has a single adhesive side and is attached via its other side, by heating during the thermoforming, to the second side (18) of the thermoformed sheet (12).

13. Process for manufacturing a thermoformed product according to Claim 9, **characterized in that** it consists in passing the superposed sheet (12) and plastic film (20) into thermoforming means, in thermoforming at least the sheet or the sheet and the film simultaneously, and in attaching them to one another during the thermoforming.

## Patentansprüche

1. Thermogeformtes Erzeugnis für eine Schall- und/oder Wärmedämmplatte, insbesondere für ein Kraftfahrzeug, umfassend: eine thermogeformte Kunststofffolie (12) mit Zellen (14), die an einer ihrer Flächen hervorstehende Resonatoren bilden, **dadurch gekennzeichnet, dass** eine zweite Fläche (18) der Folie (12), auf welcher die Zellen (14) auslaufen, mit einem Kunststofffilm (20) bedeckt ist, der mindestens eine Haftfläche zum Klebebefestigen an einem Träger (10) aufweist, wobei dieser Film einen im Wesentlichen dichten Verschluss der Zellen (14) sicherstellt.

2. Erzeugnis nach Anspruch 1, **dadurch gekennzeichnet, dass** die Folie (12) aus Polyethylen- oder Polypropylenschaum ist und eine Dicke im Bereich zwischen ungefähr 1 und 6 Millimetern hat.

3. Erzeugnis nach Anspruch 2, **dadurch gekennzeichnet, dass** die Folie (12) aus einem Schaum aus vernetztem Polyethylen oder aus vernetztem oder nicht vernetztem Polypropylen ist.

4. Erzeugnis nach Anspruch 1, **dadurch gekennzeichnet, dass** die Folie aus kompaktem Polyethylen oder Polypropylen ist und eine Dicke im Bereich zwischen ungefähr 0,15 und 1 Millimeter hat.

5. Erzeugnis nach einem der Ansprüche 1 bis 4, **dadurch gekennzeichnet, dass** der Film (20) eine Haftfläche aufweist und mit seiner anderen Fläche an der thermogeformten Folie befestigt ist, wobei diese Befestigung beispielsweise eine Heißverschweißung oder eine Ultraschallschweißung ist.

6. Erzeugnis nach einem der Ansprüche 1 bis 4, **dadurch gekennzeichnet, dass** der Kunststofffilm (20) durch Kleben an der zweiten Fläche (18) der Folie (12) befestigt ist.

7. Erzeugnis nach einem der vorhergehenden Ansprüche, **dadurch gekennzeichnet, dass** die Zellen (14) zylinder, parallelepiped-, kegelstumpf- oder pyramidenstumpfförmig sind.

8. Erzeugnis nach einem der vorhergehenden Ansprüche, **dadurch gekennzeichnet, dass** die Zellen (14) eine Höhe im Bereich zwischen ungefähr 10 und 30 Millimetern haben.

9. Erzeugnis nach einem der Ansprüche 1 bis 8, **dadurch gekennzeichnet, dass** der Kunststofffilm (20) thermogeformt ist.

10. Verfahren zum Herstellen eines thermogeformten Erzeugnisses des Typs nach einem der Ansprüche 1 bis 8, **dadurch gekennzeichnet, dass** es umfasst, die Kunststofffolie (12) thermozuformen, dann auf ihre zweite Fläche (18) einen Kunststofffilm (20) aufzubringen, wovon, zur Befestigung der Gesamtheit an einem Träger (10), mindestens eine Fläche haftend ist.

11. Verfahren nach Anspruch 10, **dadurch gekennzeichnet, dass** die zweite Fläche (18) der thermogeformten Folie (12) haftend ist, und **dadurch**, dass der Film (20) durch Kleben an der Folie (12) befestigt wird.

12. Verfahren nach Anspruch 10, **dadurch gekennzeichnet, dass** der Film (20) eine einzige Haftfläche aufweist und mit seiner anderen Fläche durch Erwärmen beim Thermoformen an der zweiten Fläche (18) der thermogeformten Folie (12) befestigt wird.

13. Verfahren zum Herstellen eines thermogeformten Erzeugnisses nach Anspruch 9, **dadurch gekennzeichnet, dass** es umfasst, die Folie (12) und den Kunststofffilm (20) aufeinanderliegend in Thermoformungsmittel zu überführen, mindestens die Folie oder die Folie und den Film gleichzeitig thermozuformen und sie während des Thermoformens aneinander zu befestigen.
